# EUROPEAN PATENT APPLICATION

(11) **EP 4 644 206 A1**
(43) Date of publication of application: **05.11.2025**
(21) Application number: 23910083.7
(22) Date of filing: 12.12.2023
(51) Int. Cl.: B60W 60/00

(54) **VEHICLE CONTROL METHOD, AUTONOMOUS DRIVING CONTROLLER, STEERING CONTROLLER, AND VEHICLE**

(30) Priority: 28.12.2022 CN 202211691291
(71) Applicant: BYD Company Limited, Shenzhen, Guangdong 518118 (CN)
(72) Inventor: WEI, Long, Shenzhen, Guangdong 518118 (CN); LIAO, Xiaojun, Shenzhen, Guangdong 518118 (CN); ZHANG, Li, Shenzhen, Guangdong 518118 (CN); HAN, Bing, Shenzhen, Guangdong 518118 (CN); GUO, Xiaozi, Shenzhen, Guangdong 518118 (CN)
(74) Representative: Mathys & Squire
(86) International application number: PCT/CN2023/138073
(87) International publication number: WO 2024/140153

(57) **Abstract**

The present disclosure provides a vehicle control method, an autonomous driving controller, a steering controller, a vehicle, and a computer-readable storage medium.. The method includes: when a vehicle is in an autonomous driving mode, an autonomous driving controller receives a first steering signal from a steering column of the vehicle, and obtains holding information of a steering wheel of the vehicle, wherein the holding information indicates whether the steering wheel is held. Then, the autonomous driving controller controls, based on the first steering signal and the holding information, the vehicle to maintain or exit the autonomous driving mode, or in response to the first steering signal, controls the vehicle to exit the autonomous driving mode, and controls, based on the holding information, the vehicle to provide an alarm.

## Description

### CROSS-REFERENCE TO RELATED APPLICATIONS

The present disclosure claims priority to Chinese Patent Application No. 202211691291.4, filed on December 28, 2022, and entitled "VEHICLE CONTROL METHOD, AUTONOMOUS DRIVING CONTROLLER, STEERING CONTROLLER, AND VEHICLE", which is incorporated herein by reference in its entirety.

### TECHNICAL FIELD

The present disclosure relates to the field of vehicle technologies, and in particular, to a vehicle control method, an autonomous driving controller, a steering controller, a vehicle, and a computer-readable storage medium.

### BACKGROUND

As the pace of development of automotive intelligence accelerates, high-level intelligent driving functions are gradually entering the market. High-level intelligent driving allows a driver to take their hands off a steering wheel and enables an intelligent driving system to take full control of a vehicle. When the driver needs to take over the vehicle, the driver may control the vehicle by operating the steering wheel. During the hands-off period, the driver may neglect the running status of the vehicle due to other activities. Based on the expected functional safety analysis, a reasonably foreseeable misuse scenario is: in an autonomous driving mode, the steering wheel is touched by the body of the driver or other objects, causing the steering wheel to turn. Consequently, unexpected steering angle signal and torque signal inputs are generated, causing the intelligent driving system to incorrectly determine that the driver intends to take over the vehicle. As a result, unexpected steering can cause a serious accident.

### SUMMARY

In view of this, the present disclosure provides a vehicle control method, an autonomous driving controller, a steering controller, a vehicle, and a computer-readable storage medium, so that during autonomous driving, a vehicle can identify an intention of a driver to take over the vehicle, and if the driver has no intention to take over the vehicle but accidentally touches a steering wheel, causing the steering wheel to turn, the vehicle can take corresponding countermeasures to ensure driving safety.

According to a first aspect, the present disclosure provides a vehicle control method, including: when a vehicle is in an autonomous driving mode, receiving a first steering signal from a steering column of the vehicle, wherein the first steering signal includes a first torque signal and/or a first steering angle signal; obtaining holding information of a steering wheel of the vehicle, wherein the holding information indicates whether the steering wheel is held; and controlling, based on the first steering signal and the holding information, the vehicle to maintain or exit the autonomous driving mode.

In some embodiments, controlling, based on the first steering signal and the holding information, the vehicle to maintain or exit the autonomous driving mode, includes: in response to the first steering signal, determining, based on the holding information, whether the steering wheel is held; and if the holding information indicates that the steering wheel is held, controlling the vehicle to exit the autonomous driving mode; or if the holding information indicates that the steering wheel is not held, controlling the vehicle to maintain the autonomous driving mode.

In some embodiments, the vehicle control method further includes: if the holding information indicates that the steering wheel is not held, controlling the vehicle to provide an alarm.

In some embodiments, obtaining the holding information of the steering wheel of the vehicle includes: photographing the steering wheel by using a camera of the vehicle to obtain an image of the steering wheel; and obtaining the holding information based on the image of the steering wheel.

In some embodiments, obtaining the holding information based on the image of the steering wheel includes: if the image of the steering wheel satisfies a preset condition, determining that the holding information indicates that the steering wheel is held; or if the image of the steering wheel does not satisfy the preset condition, determining that the holding information indicates that the steering wheel is not held, where the preset condition is: the image of the steering wheel including a human hand, or the image of the steering wheel including a human hand holding the steering wheel.

In some embodiments, the vehicle control method further includes: obtaining sitting posture information and sight line information of a driver of the vehicle; and controlling, based on the first steering signal and the holding information, the vehicle to maintain or exit the autonomous driving mode includes: controlling, based on the first steering signal, the holding information, the sitting posture information, and the sight line information, the vehicle to maintain or exit the autonomous driving mode.

In some embodiments, controlling, based on the first steering signal, the holding information, the sitting posture information, and the sight line information, the vehicle to maintain or exit the autonomous driving mode includes: in response to the first steering signal, determining, based on the holding information, whether the steering wheel is held; and if the holding information indicates that the steering wheel is not held, controlling the vehicle to maintain the autonomous driving mode; or if the holding information indicates that the steering wheel is held, controlling, based on the sitting posture information and the sight line information, the vehicle to maintain or exit the autonomous driving mode.

In some embodiments, controlling, based on the sitting posture information and the sight line information, the vehicle to maintain or exit the autonomous driving mode includes: if the sitting posture information indicates that a sitting posture of the driver is a preset sitting posture, and the sight line information indicates that a sight line direction of the driver is a preset direction, controlling the vehicle to exit the autonomous driving mode; or if the sitting posture information indicates that the sitting posture of the driver is not the preset sitting posture, or the sight line information indicates that the sight line direction of the driver is not the preset direction, controlling the vehicle to maintain the autonomous driving mode.

According to a second aspect, the present disclosure provides another vehicle control method, including: receiving a first steering signal from a steering column of a vehicle, wherein the first steering signal includes a first torque signal and/or a first steering angle signal; obtaining takeover intention information of a driver, wherein the takeover intention information of the driver is determined based on holding information of a steering wheel of the vehicle, and the holding information indicates whether the steering wheel is held; receiving a second steering signal from an autonomous driving controller of the vehicle, wherein the second steering signal includes a second torque signal and/or a second steering angle signal; determining a target steering signal from the first steering signal and the second steering signal based on the takeover intention information of the driver; and controlling, based on the target steering signal, steering of the vehicle.

In some embodiments, determining the target steering signal from the first steering signal and the second steering signal based on the takeover intention information of the driver includes: if the takeover intention information of the driver is that the driver has an intention to take over the vehicle, determining the first steering signal as the target steering signal; or if the takeover intention information of the driver is that the driver has no intention to take over the vehicle, determining the second steering signal as the target steering signal.

In some embodiments, if the holding information indicates that the steering wheel is held, the takeover intention information of the driver is that the driver has an intention to take over the vehicle; or if the holding information indicates that the steering wheel is not held, the takeover intention information of the driver is that the driver has no intention to take over the vehicle.

In some embodiments, the takeover intention information of the driver is determined based on the holding information of the steering wheel of the vehicle, sitting posture information, and sight line information of the driver; and if the holding information indicates that the steering wheel is held, the sitting posture information indicates that a sitting posture of the driver is a preset sitting posture, and the sight line information indicates that a sight line direction of the driver is a preset direction, the takeover intention information of the driver is that the driver has an intention to take over the vehicle; if the holding information indicates that the steering wheel is held, and the sitting posture information indicates that the sitting posture of the driver is not the preset sitting posture, the takeover intention information of the driver is that the driver has no intention to take over the vehicle; if the holding information indicates that the steering wheel is held, and the sight line information indicates that the sight line direction of the driver is not the preset direction, the takeover intention information of the driver is that the driver has no intention to take over the vehicle; or if the holding information indicates that the steering wheel is not held, the takeover intention information of the driver is that the driver has no intention to take over the vehicle.

In some embodiments, obtaining the takeover intention information of the driver includes: receiving the takeover intention information of the driver sent by the autonomous driving controller.

According to a third aspect, the present disclosure provides another vehicle control method, including: when a vehicle is in an autonomous driving mode, receiving a first steering signal from a steering column of the vehicle, wherein the first steering signal includes a first torque signal and/or a first steering angle signal; obtaining holding information of a steering wheel of the vehicle, wherein the holding information indicates whether the steering wheel is held; and in response to the first steering signal, controlling the vehicle to exit the autonomous driving mode, and controlling, based on the holding information, the vehicle to provide an alarm.

According to a fourth aspect, the present disclosure provides an autonomous driving controller, including a memory, a processor, and a computer program that is stored in the memory and can be run on the processor, wherein the processor implements the method according to the first aspect when executing the computer program, or the processor implements the method according to the third aspect when executing the computer program.

According to a fifth aspect, the present disclosure provides a steering controller, including a memory, a processor, and a computer program that is stored in the memory and that can be run on the processor, wherein the processor implements the method according to the second aspect when executing the computer program.

According to a sixth aspect, the present disclosure provides a vehicle. The vehicle includes: a steering column, wherein a steering sensor is disposed on the steering column, and the steering sensor is configured to output a first steering signal of the steering column; the autonomous driving controller according to the fourth aspect; the steering controller according to the fifth aspect, wherein the steering controller is connected to the steering sensor and the autonomous driving controller separately; and a steering motor, wherein the steering motor is connected to the steering controller.

According to a seventh aspect, the present disclosure provides a computer-readable storage medium, wherein the computer-readable storage medium stores a computer program, and when the computer program is executed by a processor, the method according to the first aspect, the second aspect, or the third aspect is implemented.

It will be understood from the above that, according to the vehicle control method provided by the present disclosure, when the vehicle is in the autonomous driving mode, the first steering signal is received from the steering column of the vehicle, the holding information of the steering wheel of the vehicle is obtained, where the holding information indicates whether the steering wheel is held, and then the vehicle is controlled, based on the first steering signal and the holding information, to maintain or exit the autonomous driving mode. According to the solution of the present disclosure, during autonomous driving, the vehicle can identify the intention of the driver to take over the vehicle, and if the driver has no intention to take over the vehicle but accidentally touches the steering wheel, causing the steering wheel to turn, the vehicle can take corresponding countermeasures to ensure driving safety.

It will be understood that, for beneficial effects of the second aspect to the seventh aspect, refer to related descriptions in the first aspect. Details are not described herein again.

### BRIEF DESCRIPTION OF DRAWINGS

To describe the technical solutions in embodiments of the present disclosure more clearly, the following briefly describes the accompanying drawings required for describing embodiments and a related technology. It will be appreciated that, the accompanying drawings in the following description show some embodiments of the present disclosure, and a person of ordinary skill in the art may still derive other drawings from these accompanying drawings without creative efforts.
FIG. 1 is a diagram of a structure of a vehicle according to an embodiment of the present disclosure;
FIG. 2 is a diagram of a structure of another vehicle according to an embodiment of the present disclosure;
FIG. 3 is a flowchart for implementing a vehicle control method according to an embodiment of the present disclosure;
FIG. 4 is a flowchart for implementing another vehicle control method according to an embodiment of the present disclosure;
FIG. 5 is a flowchart for implementing still another vehicle control method according to an embodiment of the present disclosure;
FIG. 6 is a diagram of a structure of an autonomous driving controller according to an embodiment of the present disclosure; and
FIG. 7 is a diagram of a structure of a steering controller according to an embodiment of the present disclosure.

### DESCRIPTION OF EMBODIMENTS

In the following descriptions, for illustration instead of limitation, specific details such as a particular system structure and a particular technology are provided for thorough understanding of embodiments of the present disclosure. However, a person skilled in the art should know that the present disclosure may also be implemented in other embodiments without these specific details. In other cases, detailed descriptions of well-known systems, apparatuses, circuits, and methods are omitted, so that the present disclosure is described without being obscured by unnecessary details.

In a related technology, during autonomous driving of a vehicle, an autonomous driving controller of the vehicle outputs a steering signal to a steering controller. The steering controller may complete autonomous steering based on the steering signal output by the autonomous driving controller, eliminating a need for driver control. When a driver wants to take over the vehicle, the driver only needs to turn a steering wheel, and the autonomous driving controller exits an autonomous driving mode and no longer outputs a steering signal to the steering controller. Accordingly, the steering controller may receive a steering signal output by a steering sensor of a steering column of the vehicle, and control steering of the vehicle based on the steering signal. In a scenario, after enabling the autonomous driving mode, the driver takes their hands off the steering wheel and focuses on another thing. In this process, the driver may accidentally touch the steering wheel, causing the steering wheel to turn. Consequently, the autonomous driving controller exits the autonomous driving mode. The driver may not notice that the vehicle has exited the autonomous driving mode and may not hold the steering wheel to take over control of the vehicle. Consequently, the vehicle makes an unexpected turn, causing a traffic accident. In another scenario, if the steering sensor on the steering column fails, the steering sensor may incorrectly output a steering signal, causing the autonomous driving controller to exit the autonomous driving mode. If the driver does not notice that the vehicle has exited the autonomous driving mode and does not hold the steering wheel to take over control of the vehicle, the vehicle makes an unexpected turn, causing a traffic accident. In view of this, the present disclosure provides a vehicle control method, an autonomous driving controller, a steering controller, a vehicle, and a computer-readable storage medium, so that during autonomous driving, a vehicle can identify an intention of a driver to take over the vehicle, and if the driver has no intention to take over the vehicle but accidentally touches a steering wheel, causing the steering wheel to turn, the vehicle can take corresponding countermeasures to ensure driving safety. In addition, according to the solution of the present disclosure, if the steering sensor fails and incorrectly outputs a steering signal, driving safety can still be ensured.

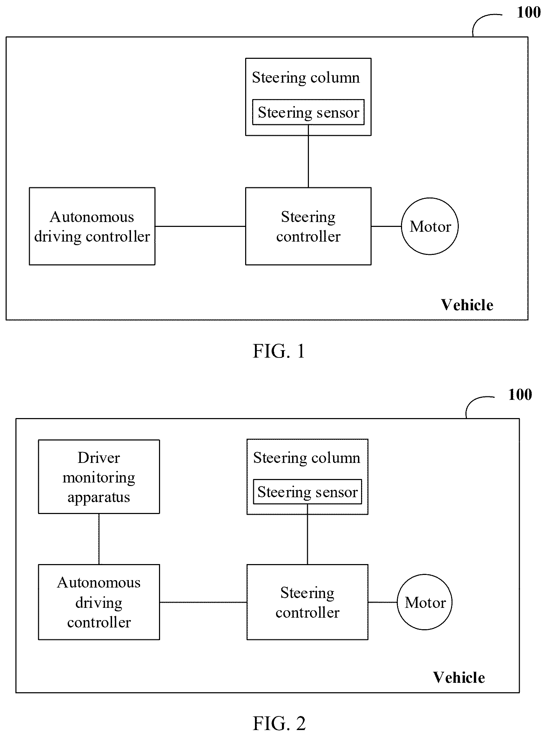

A vehicle provided by an embodiment of the present disclosure is described below. Referring to FIG. 1, the vehicle 100 includes: a steering column, an autonomous driving controller, a steering controller, and a steering motor. A steering sensor is disposed on the steering column, and the steering sensor is configured to output a first steering signal of the steering column; and the steering controller is connected to the steering sensor, the autonomous driving controller, and the steering motor separately.

Specifically, the steering sensor includes a torque sensor and a steering angle sensor. The torque sensor is configured to detect a torque applied (by a driver) for turning a steering wheel, and the steering angle sensor is configured to detect a steering angle of the steering wheel. When an external force causes the steering wheel to turn, the steering sensor may output a steering signal. When the vehicle 100 is in an autonomous driving mode, the autonomous driving controller receives the first steering signal output by the steering sensor. The first steering signal may include only a first torque signal, only a first steering angle signal, or both the first torque signal and the first steering angle signal. This is not limited herein. The autonomous driving controller may obtain holding information of the steering wheel of the vehicle, and the holding information indicates whether the steering wheel is held. Finally, the autonomous driving controller may control, based on the first steering signal and the holding information, the vehicle 100 to maintain the autonomous driving mode or exit the autonomous driving mode.

It will be noted that in the autonomous driving mode, the autonomous driving controller may sense an environment around the vehicle 100 by using sensors such as a camera and a radar, and then output a corresponding second steering signal based on sensing data. The second steering signal may include only a second torque signal, only a second steering angle signal, or both the second torque signal and the second steering angle signal. The steering controller may receive the first steering signal output by the steering sensor and the second steering signal output by the autonomous driving controller. To determine a target steering signal, the steering controller may further obtain the holding information of the steering wheel, select a steering signal from the first steering signal and the second steering signal as the target steering signal based on the holding information, and then control the steering motor based on the target steering signal to control the vehicle 100 to steer.

Optionally, referring to FIG. 2, the vehicle 100 may further include a driver monitoring apparatus. The driver monitoring apparatus is connected to the autonomous driving controller. The driver monitoring apparatus may include a camera, and an image of the steering wheel may be obtained by using the camera. The driver monitoring apparatus may send the image to the autonomous driving controller, and the autonomous driving controller may obtain the holding information based on the image. The autonomous driving controller may further send the holding information to the steering controller, so that the steering controller may select a steering signal from the first steering signal and the second steering signal as the target steering signal based on the holding information.

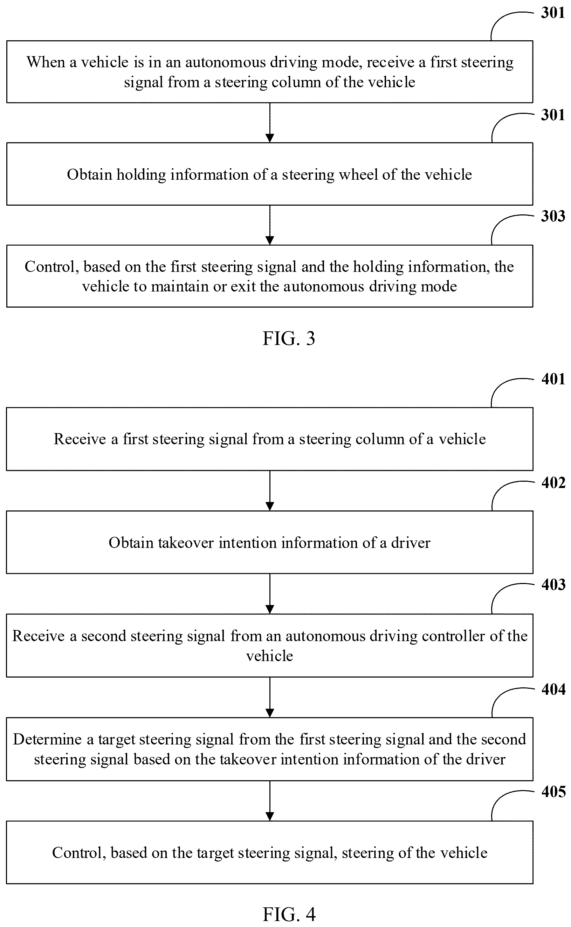

A vehicle control method provided by an embodiment of the present disclosure is described below. Referring to FIG. 3, the vehicle control method may be applied to the autonomous driving controller in FIG. 1. The method includes the following steps.

Step 301: When a vehicle is in an autonomous driving mode, receive a first steering signal from a steering column of the vehicle.

Step 302: Obtain holding information of a steering wheel of the vehicle.

Step 303: Control, based on the first steering signal and the holding information, the vehicle to maintain or exit the autonomous driving mode.

In the embodiment of the present disclosure, when the vehicle is in the autonomous driving mode, an autonomous driving controller of the vehicle outputs a steering signal to a steering controller, and the steering controller may complete autonomous steering based on the steering signal output by the autonomous driving controller. During autonomous driving, a driver may turn the steering wheel because the driver wants to take over the vehicle, or the driver may turn the steering wheel due to an accidental touch. When the steering wheel is turned, a steering sensor on the steering column of the vehicle may output the first steering signal. The autonomous driving controller may receive the first steering signal output by the steering sensor. Specifically, the first steering signal may include a first torque signal and/or a first steering angle signal.

The holding information indicates whether the steering wheel is held. When the steering wheel is held, it indicates that the driver has an intention to take over the vehicle. When the steering wheel is not held, it indicates that the driver has no intention to take over the vehicle (the steering wheel may be touched accidentally). When the autonomous driving controller receives the first steering signal, in response to the first steering signal, the autonomous driving controller may control, based on the holding information, the vehicle to maintain or exit the autonomous driving mode.

It will be understood that a moment targeted by the holding information should be close to a moment at which the first steering signal is generated, so that whether the driver has an intention to take over the vehicle is determined more accurately. Specifically, a time difference between the moment targeted by the holding information and the moment at which the first steering signal is generated should be smaller than a preset time threshold. The moment targeted by the holding information will be understood as follows: if the holding information indicates that the steering wheel is held at a first moment, then the first moment is the moment targeted by the steering wheel; or if the holding information indicates that the steering wheel is held at a second moment, then the second moment is the moment targeted by the steering wheel. Because the first steering signal is transmitted between the steering sensor and the autonomous driving controller in a short time that can be ignored, the autonomous driving controller may regard a moment at which the first steering signal is received as the moment at which the first steering signal is generated.

In some embodiments, step 303 includes: in response to the first steering signal, determining, based on the holding information, whether the steering wheel is held; and if the holding information indicates that the steering wheel is held, controlling the vehicle to exit the autonomous driving mode; or if the holding information indicates that the steering wheel is not held, controlling the vehicle to maintain the autonomous driving mode.

When the first steering signal is received, the autonomous driving controller may determine, based on the holding information, whether the steering wheel is held. If the holding information indicates that the steering wheel of the vehicle is held, the vehicle is controlled to exit the autonomous driving mode. After the vehicle exits the autonomous driving mode, the driver takes over and controls driving of the vehicle. If the holding information indicates that the steering wheel of the vehicle is not held, the vehicle is controlled to maintain the autonomous driving mode. In the autonomous driving mode, the autonomous driving controller continues to output a steering signal to the steering controller so that the steering controller controls, based on the steering signal, steering of the vehicle.

In some embodiments, to further improve driving safety, the vehicle control method further includes: if the holding information indicates that the steering wheel is not held, controlling the vehicle to provide an alarm.

In the embodiment of the present disclosure, because the holding information cannot achieve 100% accuracy, when the driver accidentally touches the steering wheel a plurality of times, a risk of the holding information being incorrect increases accordingly. Controlling, based on the incorrect holding information by the autonomous driving controller, the vehicle to maintain or exit the autonomous driving mode may cause a traffic accident. In view of this, in the embodiment of the present disclosure, if the holding information indicates that the steering wheel is not held, the autonomous driving controller may control the vehicle to provide the alarm to inform the driver that the steering wheel is accidentally touched, thereby better regulating behavior of the driver and reducing a quantity of accidental touches.

In some embodiments, in order to obtain more accurate holding information, step 302 includes: photographing the steering wheel by using a camera of the vehicle to obtain an image of the steering wheel; and obtaining the holding information based on the image of the steering wheel.

In the embodiment of the present disclosure, the camera may be the camera of the driver monitoring apparatus in FIG. 2. The steering wheel is photographed by using the camera, to obtain the image of the steering wheel. Optionally, the image of the steering wheel may include the complete steering wheel. In an implementation, the image of the steering wheel may be input into a trained image recognition model, and the image recognition model outputs the holding information. Specifically, images in which a steering wheel is held and images in which a steering wheel is not held may be used together as training samples, and the training samples are used to train the image recognition model.

Optionally, obtaining the holding information based on the image of the steering wheel includes: if the image of the steering wheel satisfies a preset condition, determining that the holding information indicates that the steering wheel is held; or if the image of the steering wheel does not satisfy the preset condition, determining that the holding information indicates that the steering wheel is not held.

The preset condition is: the image of the steering wheel including a human hand, or the image of the steering wheel including a human hand holding the steering wheel.

Diversity of ways in which drivers control a steering wheel is considered. Some drivers do not hold a steering wheel but simply place a hand on the steering wheel when controlling the steering wheel. In view of this, the preset condition may be that the image of the steering wheel includes a human hand. When the preset condition is that the image of the steering wheel includes a human hand, if the image of the steering wheel includes a human hand, it is determined that the holding information indicates that the steering wheel is held; or if the image of the steering wheel does not include the human hand, it is determined that the holding information indicates that the steering wheel is not held. It should be noted that, when the preset condition is that the image of the steering wheel includes a human hand, a proportion of the steering wheel in the image should be as large as possible to reduce interference of a human hand in space other than the steering wheel in determining the holding information.

The preset condition may alternatively be that the image of the steering wheel includes a human hand holding the steering wheel, so that a takeover intention of the driver is determined more accurately. When the preset condition is that the image of the steering wheel includes a human hand holding the steering wheel, if the image of the steering wheel includes a human hand holding the steering wheel, it is determined that the holding information indicates that the steering wheel is held; or if the image of the steering wheel does not include a human hand holding the steering wheel, it is determined that the holding information indicates that the steering wheel is not held. It should be noted that, when the preset condition is that the image of the steering wheel includes a human hand holding the steering wheel, if the driver simply puts a hand on the steering wheel, it is determined that the holding information indicates that the steering wheel is not held.

In some embodiments, in order to more accurately obtain an intention of the driver to take over the vehicle, the foregoing vehicle control method further includes: obtaining sitting posture information and sight line information of the driver of the vehicle. Step 303 includes: controlling, based on the first steering signal, the holding information, the sitting posture information, and the sight line information, the vehicle to maintain or exit the autonomous driving mode.

The sitting posture information indicates a sitting posture of the driver, and the sight line information indicates a sight line direction of the driver. According to the embodiment of the present disclosure, the intention of the driver to take over the vehicle is determined with reference to the holding information, the sitting posture information, and the sight line information, so that accuracy can be improved.

Specifically, controlling, based on the first steering signal, the holding information, the sitting posture information, and the sight line information, the vehicle to maintain or exit the autonomous driving mode includes: in response to the first steering signal, determining, based on the holding information, whether the steering wheel is held; and if the holding information indicates that the steering wheel is not held, controlling the vehicle to maintain the autonomous driving mode; or if the holding information indicates that the steering wheel is held, controlling, based on the sitting posture information and the sight line information, the vehicle to maintain or exit the autonomous driving mode.

In the embodiment of the present disclosure, when the first steering signal is received, the autonomous driving controller may first determine, based on the holding information, whether the steering wheel is held. If the steering wheel is not held, the autonomous driving controller may control the vehicle to maintain the autonomous driving mode. It is considered that the driver may simply put a hand on the steering wheel but actually has no intention to take over the vehicle (for example, the driver sleeps with their hand on the steering wheel), and if the holding information indicates that the steering wheel is held, the autonomous driving controller may further control, based on the sitting posture information and the sight line information, the vehicle to maintain or exit the autonomous driving mode.

Optionally, controlling, based on the sitting posture information and the sight line information, the vehicle to maintain or exit the autonomous driving mode includes: if the sitting posture information indicates that a sitting posture of the driver is a preset sitting posture, and the sight line information indicates that a sight line direction of the driver is a preset direction, controlling the vehicle to exit the autonomous driving mode; or if the sitting posture information indicates that the sitting posture of the driver is not the preset sitting posture, or the sight line information indicates that the sight line direction of the driver is not the preset direction, controlling the vehicle to maintain the autonomous driving mode.

In the embodiment of the present disclosure, if the holding information indicates that the steering wheel is held, it is further determined whether the sitting posture of the driver is the preset sitting posture and whether the sight line direction of the driver is the preset direction. If the sitting posture information indicates that the sitting posture of the driver is the preset sitting posture, and the sight line information indicates that the sight line direction of the driver is the preset direction, it is considered that the driver has an intention to take over the vehicle, and the vehicle is controlled to exit the autonomous driving mode. If the sitting posture information indicates that the sitting posture of the driver is not the preset sitting posture, or the sight line information indicates that the sight line direction of the driver is not the preset direction, it is considered that the driver has no intention to take over the vehicle, and the vehicle is controlled to maintain the autonomous driving mode. The preset sitting posture may be that the driver sits in a driving seat, and the preset direction may be that the sight line of the driver faces the front of the vehicle.

It will be understood from the above that, according to the vehicle control method provided by the present disclosure, when the vehicle is in the autonomous driving mode, the first steering signal is received from the steering column of the vehicle, the holding information of the steering wheel of the vehicle is obtained, where the holding information indicates whether the steering wheel is held, and then the vehicle is controlled, based on the first steering signal and the holding information, to maintain or exit the autonomous driving mode. According to the solution of the present disclosure, during autonomous driving, the vehicle can identify the intention of the driver to take over the vehicle, and if the driver has no intention to take over the vehicle but accidentally touches the steering wheel, causing the steering wheel to turn, the vehicle can take corresponding countermeasures to ensure driving safety.

Another vehicle control method provided by an embodiment of the present disclosure is described below. Referring to FIG. 4, the vehicle control method may be applied to the steering controller in FIG. 1. The method includes the following steps.

Step 401: Receive a first steering signal from a steering column of a vehicle.

Step 402: Obtain takeover intention information of a driver.

Step 403: Receive a second steering signal from an autonomous driving controller of the vehicle.

Step 404: Determine a target steering signal from the first steering signal and the second steering signal based on the takeover intention information of the driver.

Step 405: Control, based on the target steering signal, steering of the vehicle.

In the embodiment of the present disclosure, when a steering wheel is turned under action of an external force, a steering sensor on the steering column of the vehicle outputs the first steering signal. When the vehicle is in an autonomous driving mode, the autonomous driving controller of the vehicle outputs the second steering signal. The first steering signal includes at least one of a first torque signal and a first steering angle signal, and the second steering signal includes at least one of a second torque signal and a second steering angle signal. The takeover intention information of the driver is determined based on holding information of the steering wheel of the vehicle, and the holding information indicates whether the steering wheel is held. When the steering controller receives both the first steering signal and the second steering signal, the steering controller may determine one of the first steering signal and the second steering signal as the target steering signal based on the takeover intention information of the driver. The steering controller may control a steering motor of the vehicle based on the target steering signal, thereby controlling steering of the vehicle. According to the solution of the present disclosure, when the first steering signal is received, it can be determined based on the takeover intention information of the driver whether the driver has an intention to take over the vehicle. If the driver has no intention to take over the vehicle, it is considered that the first steering signal is a steering signal input by an accidental touch. If the driver has an intention to take over the vehicle, it is considered that the first steering signal is a steering signal input after the driver takes over the vehicle. The target steering signal is determined based on the takeover intention information of the driver, so that a traffic accident caused by the driver accidentally touching the steering wheel can be effectively avoided.

In some embodiments, step 404 includes: if the takeover intention information of the driver is that the driver has an intention to take over the vehicle, determining the first steering signal as the target steering signal; or if the takeover intention information of the driver is that the driver has no intention to take over the vehicle, determining the second steering signal as the target steering signal.

In the embodiment of the present disclosure, if the takeover intention information of the driver is that the driver has an intention to take over the vehicle, the steering controller determines the first steering signal as the target steering signal and controls steering of the vehicle based on the first steering signal to respond to control of the driver. If the takeover intention information of the driver is that the driver has no intention to take over the vehicle, the steering controller determines the second steering signal as the target steering signal and controls steering of the vehicle based on the second steering signal, to avoid interference with driving caused by the driver accidentally touching the steering wheel.

In some embodiments, if the holding information indicates that the steering wheel is not held, the takeover intention information of the driver is that the driver has no intention to take over the vehicle. If the holding information indicates that the steering wheel is held, the takeover intention information of the driver is that the driver has an intention to take over the vehicle.

In some other embodiments, if the holding information indicates that the steering wheel is held, sitting posture information indicates that a sitting posture of the driver is a preset sitting posture, and sight line information indicates that a sight line direction of the driver is a preset direction, the takeover intention information of the driver is that the driver has an intention to take over the vehicle. If the holding information indicates that the steering wheel is held, and the sitting posture information indicates that the sitting posture of the driver is not the preset sitting posture, the takeover intention information of the driver is that the driver has no intention to take over the vehicle. If the holding information indicates that the steering wheel is held, and the sight line information indicates that the sight line direction of the driver is not the preset direction, the takeover intention information of the driver is that the driver has no intention to take over the vehicle. If the holding information indicates that the steering wheel is not held, the takeover intention information of the driver is that the driver has no intention to take over the vehicle. In other words, if the holding information indicates that the steering wheel is held, but at least one of the following conditions is met: the sitting posture information indicates that the sitting posture of the driver is not the preset sitting posture and the sight line information indicates that the sight line direction of the driver is not the preset direction, the takeover intention information of the driver is that the driver has no intention to take over the vehicle. The preset sitting posture may be that the driver sits upright in the driving seat, and the preset direction may be that the sight line of the driver faces the front of the vehicle.

In some embodiments, the autonomous driving controller may photograph the steering wheel by using a camera of the vehicle to obtain an image of the steering wheel, obtain the holding information based on the image of the steering wheel, and determine the takeover intention information of the driver based on the holding information. Accordingly, the steering controller may receive takeover intention information of the driver from the autonomous driving controller.

It will be understood from the above that, according to the vehicle control method provided by the present disclosure, when receiving both the first steering signal and the second steering signal, the steering controller may determine, based on the takeover intention information of the driver, whether the driver has an intention to take over the vehicle. If the driver has no intention to take over the vehicle, the first steering signal is considered to be a steering signal input by an accidental touch, the first steering signal is ignored, and steering of the vehicle continues to be controlled based on the second steering signal. If the driver has an intention to take over the vehicle, the first steering signal is considered to be a steering signal input after the driver takes over the vehicle, and steering of the vehicle is controlled based on the first steering signal. In this way, a traffic accident caused by the driver accidentally touching the steering wheel can be effectively avoided. In addition, according to the solution of the present disclosure, if the steering sensor fails and incorrectly outputs a steering signal, driving safety can still be ensured.

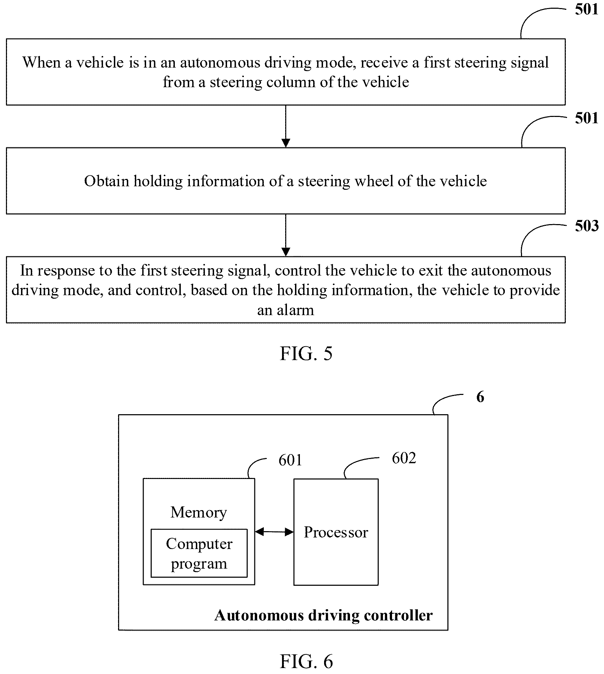

Still another vehicle control method provided by an embodiment of the present disclosure is described below. Referring to FIG. 5, the vehicle control method may be applied to the autonomous driving controller in FIG. 1. The method includes the following steps.

Step 501: When a vehicle is in an autonomous driving mode, receive a first steering signal from a steering column of the vehicle.

Step 502: Obtain holding information of a steering wheel of the vehicle.

Step 503: In response to the first steering signal, control the vehicle to exit the autonomous driving mode, and control, based on the holding information, the vehicle to provide an alarm.

In the embodiment of the present disclosure, when the vehicle is in the autonomous driving mode, an autonomous driving controller of the vehicle outputs a steering signal to a steering controller, and the steering controller may complete autonomous steering based on the steering signal output by the autonomous driving controller. During autonomous driving, a driver may turn the steering wheel because the driver wants to take over the vehicle, or the driver may turn the steering wheel due to an accidental touch. When the steering wheel is turned, a steering sensor on the steering column of the vehicle may output the first steering signal. The autonomous driving controller may receive the first steering signal output by the steering sensor. Specifically, the first steering signal may include a first torque signal and/or a first steering angle signal.

The holding information indicates whether the steering wheel is held. When the steering wheel is held, it indicates that the driver has an intention to take over the vehicle. When the steering wheel is not held, it indicates that the driver has no intention to take over the vehicle (the steering wheel may be touched accidentally). It is considered that if a steering system of the vehicle is a conventional electric power steering system, there is a mechanical connection between the steering column and wheels, and once the steering wheel is turned, a driving direction of the vehicle is inevitably affected. In view of this, when the autonomous driving controller in the embodiment of the present disclosure receives the first steering signal, in response to the first steering signal, the autonomous driving controller may control the vehicle to exit the autonomous driving mode, and control, based on the holding information, the vehicle to provide an alarm to prompt the driver to take over the vehicle.

In some embodiments, controlling, based on the holding information, the vehicle to provide the alarm includes: if the holding information indicates that the steering wheel is not held, controlling the vehicle to provide the alarm.

In the embodiment of the present disclosure, the autonomous driving controller exits the autonomous driving mode when receiving the first steering signal. After exiting autonomous driving, the autonomous driving controller may further control the vehicle to provide the alarm to prompt the driver to take over the vehicle, thereby ensuring driving safety. If the holding information indicates that the steering wheel is held, the alarm is not provided.

It will be understood from the above that, according to the vehicle control method provided by the present disclosure, when the vehicle is in the autonomous driving mode, the first steering signal is received from the steering column of the vehicle, the holding information of the steering wheel of the vehicle is obtained, where the holding information indicates whether the steering wheel is held, and then, in response to the first steering signal, the vehicle is controlled to exit the autonomous driving mode, and the vehicle is controlled, based on the holding information, to provide the alarm. According to the solution of the present disclosure, during autonomous driving, the vehicle can identify the intention of the driver to take over the vehicle, and if the driver has no intention to take over the vehicle but accidentally touches the steering wheel, causing the steering wheel to turn, the vehicle can provide the alarm to prompt the driver to take over the vehicle, thereby ensuring driving safety.

Corresponding to the vehicle control method provided above, an embodiment of the present disclosure further provides an autonomous driving controller. Referring to FIG. 6, the autonomous driving controller 6 in the embodiment of the present disclosure includes: a memory 601, one or more processors 602 (only one processor 602 is shown in FIG. 6), and a computer program that is stored in the memory 601 and can be run on the processor. The memory 601 is configured to store a software program and a unit. The processor 602 runs the software program and the unit that are stored in the memory 601, to perform various functional applications and data processing. Specifically, the processor 602 runs the computer program stored in the memory 601, to implement the vehicle control method corresponding to FIG. 3, or the processor 602 runs the computer program stored in the memory 601, to implement the vehicle control method corresponding to FIG. 5.

It will be understood that in the embodiment of the present disclosure, the processor 602 may be a central processing unit, or may be another general-purpose processor, a digital signal processor, an application-specific integrated circuit, a field programmable gate array or another programmable logic device, a discrete gate or a transistor logic device, a discrete hardware component, or the like. The general-purpose processor may be a microprocessor, or the processor may be any conventional processor, or the like.

The memory 601 may include a read-only memory and a random access memory, and provide instructions and data to the processor 602. A part or all of the memory 601 may further include a non-volatile random access memory. For example, the memory 601 may further store information about a device type.

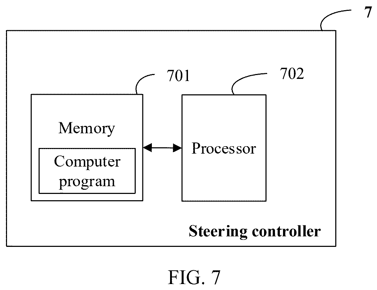

Corresponding to another vehicle control method provided above, an embodiment of the present disclosure further provides a steering controller. Referring to FIG. 7, the steering controller 7 in the embodiment of the present disclosure includes: a memory 701, one or more processors 702 (only one processor 702 is shown in FIG. 7), and a computer program that is stored in the memory 701 and can be run on the processor. The memory 701 is configured to store a software program and a unit. The processor 702 runs the software program and the unit that are stored in the memory 701, to perform various functional applications and data processing. Specifically, the processor 702 runs the computer program stored in the memory 701, to implement the vehicle control method corresponding to FIG. 4.

It will be understood that in the embodiment of the present disclosure, the processor 702 may be a central processing unit, or may be another general-purpose processor, a digital signal processor, an application-specific integrated circuit, a field programmable gate array or another programmable logic device, a discrete gate or a transistor logic device, a discrete hardware component, or the like. The general-purpose processor may be a microprocessor, or the processor may be any conventional processor, or the like.

The memory 701 may include a read-only memory and a random access memory, and provide instructions and data to the processor 702. A part or all of the memory 701 may further include a non-volatile random access memory. For example, the memory 701 may further store information about a device type.

An embodiment of the present disclosure further provides a computer-readable storage medium. The computer-readable storage medium stores a computer program. When the computer program is executed by a processor, the vehicle control method corresponding to FIG. 3 or FIG. 4 or FIG. 5 is implemented.

The foregoing embodiments are merely intended for describing the technical solutions of the present disclosure, but not for limiting the present disclosure. Although the present disclosure is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of the present disclosure, and these modifications and replacements shall fall within the protection scope of the present disclosure.

## Claims

1. A vehicle control method, comprising:
when a vehicle is in an autonomous driving mode, receiving a first steering signal from a steering column of the vehicle, wherein the first steering signal comprises a first torque signal and/or a first steering angle signal;
obtaining holding information of a steering wheel of the vehicle, wherein the holding information indicates whether the steering wheel is held; and
controlling, based on the first steering signal and the holding information, the vehicle to maintain or exit the autonomous driving mode.

2. The vehicle control method according to claim 1, wherein controlling, based on the first steering signal and the holding information, the vehicle to maintain or exit the autonomous driving mode comprises:
in response to the first steering signal, determining, based on the holding information, whether the steering wheel is held; and
if the holding information indicates that the steering wheel is held, controlling the vehicle to exit the autonomous driving mode; or
if the holding information indicates that the steering wheel is not held, controlling the vehicle to maintain the autonomous driving mode.

3. The vehicle control method according to claim 2, wherein the vehicle control method further comprises:
if the holding information indicates that the steering wheel is not held, controlling the vehicle to provide an alarm.

4. The vehicle control method according to any one of claims 1 to 3, wherein obtaining the holding information of the steering wheel of the vehicle comprises:
photographing the steering wheel by using a camera of the vehicle to obtain an image of the steering wheel; and
obtaining the holding information based on the image of the steering wheel.

5. The vehicle control method according to claim 4, wherein obtaining the holding information based on the image of the steering wheel comprises:
if the image of the steering wheel satisfies a preset condition, determining that the holding information indicates that the steering wheel is held; or
if the image of the steering wheel does not satisfy the preset condition, determining that the holding information indicates that the steering wheel is not held, wherein
the preset condition is: the image of the steering wheel comprising a human hand, or the image of the steering wheel comprising a human hand holding the steering wheel.

6. The vehicle control method according to any one of claims 1 to 5, wherein the vehicle control method further comprises:
obtaining sitting posture information and sight line information of a driver of the vehicle; and
controlling, based on the first steering signal and the holding information, the vehicle to maintain or exit the autonomous driving mode comprises:
controlling, based on the first steering signal, the holding information, the sitting posture information, and the sight line information, the vehicle to maintain or exit the autonomous driving mode.

7. The vehicle control method according to claim 6, wherein controlling, based on the first steering signal, the holding information, the sitting posture information, and the sight line information, the vehicle to maintain or exit the autonomous driving mode comprises:
in response to the first steering signal, determining, based on the holding information, whether the steering wheel is held; and
if the holding information indicates that the steering wheel is not held, controlling the vehicle to maintain the autonomous driving mode; or
if the holding information indicates that the steering wheel is held, controlling, based on the sitting posture information and the sight line information, the vehicle to maintain or exit the autonomous driving mode.

8. The vehicle control method according to claim 7, wherein controlling, based on the sitting posture information and the sight line information, the vehicle to maintain or exit the autonomous driving mode comprises:
if the sitting posture information indicates that a sitting posture of the driver is a preset sitting posture, and the sight line information indicates that a sight line direction of the driver is a preset direction, controlling the vehicle to exit the autonomous driving mode; or
if the sitting posture information indicates that the sitting posture of the driver is not the preset sitting posture, or the sight line information indicates that the sight line direction of the driver is not the preset direction, controlling the vehicle to maintain the autonomous driving mode.

9. A vehicle control method, comprising:
receiving a first steering signal from a steering column of a vehicle, wherein the first steering signal comprises a first torque signal and/or a first steering angle signal;
obtaining takeover intention information of a driver, wherein the takeover intention information of the driver is determined based on holding information of a steering wheel of the vehicle, and the holding information indicates whether the steering wheel is held;
receiving a second steering signal from an autonomous driving controller of the vehicle, wherein the second steering signal comprises a second torque signal and/or a second steering angle signal;
determining a target steering signal from the first steering signal and the second steering signal based on the takeover intention information of the driver; and
controlling, based on the target steering signal, steering of the vehicle.

10. The vehicle control method according to claim 9, wherein determining the target steering signal from the first steering signal and the second steering signal based on the takeover intention information of the driver comprises:
if the takeover intention information of the driver is that the driver has an intention to take over the vehicle, determining the first steering signal as the target steering signal; or
if the takeover intention information of the driver is that the driver has no intention to take over the vehicle, determining the second steering signal as the target steering signal.

11. The vehicle control method according to claim 10, wherein
if the holding information indicates that the steering wheel is held, the takeover intention information of the driver is that the driver has an intention to take over the vehicle; or
if the holding information indicates that the steering wheel is not held, the takeover intention information of the driver is that the driver has no intention to take over the vehicle.

12. The vehicle control method according to claim 10 or 11, wherein the takeover intention information of the driver is determined based on the holding information of the steering wheel of the vehicle, sitting posture information, and sight line information of the driver; and
if the holding information indicates that the steering wheel is held, the sitting posture information indicates that a sitting posture of the driver is a preset sitting posture, and the sight line information indicates that a sight line direction of the driver is a preset direction, the takeover intention information of the driver is that the driver has an intention to take over the vehicle;
if the holding information indicates that the steering wheel is held, and the sitting posture information indicates that the sitting posture of the driver is not the preset sitting posture, the takeover intention information of the driver is that the driver has no intention to take over the vehicle;
if the holding information indicates that the steering wheel is held, and the sight line information indicates that the sight line direction of the driver is not the preset direction, the takeover intention information of the driver is that the driver has no intention to take over the vehicle; or
if the holding information indicates that the steering wheel is not held, the takeover intention information of the driver is that the driver has no intention to take over the vehicle.

13. The vehicle control method according to any one of claims 9 to 12, wherein obtaining the takeover intention information of the driver comprises:
receiving the takeover intention information of the driver sent by the autonomous driving controller.

14. A vehicle control method, comprising:
when a vehicle is in an autonomous driving mode, receiving a first steering signal from a steering column of the vehicle, wherein the first steering signal comprises a first torque signal and/or a first steering angle signal;
obtaining holding information of a steering wheel of the vehicle, wherein the holding information indicates whether the steering wheel is held; and
in response to the first steering signal, controlling the vehicle to exit the autonomous driving mode, and controlling, based on the holding information, the vehicle to provide an alarm.

15. An autonomous driving controller, comprising a memory, a processor, and a computer program that is stored in the memory and can be run on the processor, wherein the processor implements the method according to any one of claims 1 to 8 when executing the computer program, or the processor implements the method according to claim 14 when executing the computer program.

16. A steering controller, comprising a memory, a processor, and a computer program that is stored in the memory and can be run on the processor, wherein the processor implements the method according to any one of claims 9 to 13 when executing the computer program.

17. A vehicle comprising:
a steering column, wherein a steering sensor is disposed on the steering column, and the steering sensor is configured to output a first steering signal of the steering column;
the autonomous driving controller according to claim 15;
the steering controller according to claim 16, wherein the steering controller is connected to the steering sensor and the autonomous driving controller separately; and
a steering motor, wherein the steering motor is connected to the steering controller.

18. A computer-readable storage medium, wherein the computer-readable storage medium stores a computer program, and when the computer program is executed by a processor, the method according to any one of claims 1 to 14 is implemented.
